(19) Europäisches Patentamt
European Patent Office
Office européen des brevets

(11) Veröffentlichungsnummer: **0 163 894**
**B1**

(12) **EUROPÄISCHE PATENTSCHRIFT**

(45) Veröffentlichungstag der Patentschrift: **14.11.90**

(21) Anmeldenummer: **85104856.1**

(22) Anmeldetag: **22.04.85**

(51) Int. Cl.[5]: **C 08 J 5/24,** C 08 J 5/04, C 08 L 71/00 // (C08L71/00, 81:06),(C08L71/00, 67:00),(C08L71/00, 69:00),(C08L71/00, 79:08)

(54) **Faserverbundwerkstoffe.**

(30) Priorität: **08.05.84 DE 3416855**
**11.01.85 DE 3500707**

(43) Veröffentlichungstag der Anmeldung:
**11.12.85 Patentblatt 85/50**

(45) Bekanntmachung des Hinweises auf die Patenterteilung:
**14.11.90 Patentblatt 90/46**

(84) Benannte Vertragsstaaten:
**BE DE FR GB IT NL**

(56) Entgegenhaltungen:
**EP-A-0 161 453**
**EP-A-0 193 114**
**DE-A-2 156 346**
**DE-A-3 414 492**
**US-A-4 269 953**

**Kirk-Othmer, Band 13, Seiten 970, 971;**
**Supplement Seiten 260, 261**

(73) Patentinhaber: **BASF Aktiengesellschaft**
**Carl-Bosch-Strasse 38**
**D-6700 Ludwigshafen (DE)**

(72) Erfinder: **Fischer, Juergen, Dr.**
**Thomas Mann-Str. 62**
**D-6700 Ludwigshafen (DE)**
Erfinder: **Zeiner, Hartmut, Dr.**
**Johann Strauss-Str. 13**
**D-6831 Plankstadt (DE)**
Erfinder: **Nissen, Dietmar, Dr.**
**Ziegelhäuser Landstr. 31**
**D-6900 Heidelberg (DE)**
Erfinder: **Heinz, Gerhard, Dr.**
**Im Vogelsang 2**
**D-6719 Weisenheim (DE)**
Erfinder: **Neumann, Peter, Dr.**
**Franz Schubert-Str. 1**
**D-6908 Wiesloch (DE)**

**EP 0 163 894 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft Formteile aus temperaturbeständigen, mit orientierten Fasern verstärkten Kunststoffen und Verfahren zur Herstellung solcher Faserverbundwerkstoffe durch Aufbringen der Kunststoffe auf Verstärkungsfasern.

Zur Herstellung von Hochleistungsverbundwerkestoffen wurde bisher praktisch ausschließlich mit Epoxidharzen als Matrixmaterial gearbeitet. Diese Harze bieten wegen ihren niedrigen Viskositäten den Vorteil der guten Tränkbarkeit der Verstärkungsfasern, sie haben jedoch den Nachteil, daß daraus hergestelltes Halbzeug nicht beliebig lange lagerbar ist, und daß Formgebung und Härtung gleichzeitig erfolgen müssen. Dieser Nachteil entfällt bei Verwendung von temperaturbeständigen thermoplastischen Kunststoffen als Matrixmaterial; hier ergeben sich jedoch andere Probleme: Verwendet man lösliche, amorphe Thermoplasten, wie z.B. Polysulfone oder Polyethersulfone, so erhält man Formteile, die wegen der Löslichkeit des Matrixmaterials in organischen Lösungsmitteln spannungsrißempfindlich sind, was insbesondere ihrem Einsatz im Automobilbereich entgegensteht. Versucht man, unlösliche, teilkristalline Thermoplaste, wie Polyether ketone oder Polysulfidketone, als Schmelze auf Verstärkungsfasern aufzubringen, so erhält man wegen der hohen Viskosität der Schmelze eine zu geringe Benetzung der Fasern.

In der EP—A—56 703 wird vorgeschlagen, Fasergebilde mit Schmelzen niedermolekularer, niedrigviskoser thermoplastischer Polymerer zu imprägnieren. Die dabei entstehenden Faserverbundmaterialien zeigen jedoch — insbesondere bei teilkristallinen Thermoplasten — ein umbefriedigendes Zähigkeits- und Dehnungsverhalten. In der EP—A—56 703 ist zwar die Möglichkeit der nachträglichen Erhöhung des Molekulargewichts angedeutet; die empfohlenen Methoden (Festphasenkondensation, Zusatz von Vernetzungsmitteln und Bestrahlung) führen jedoch bei den dort beschriebenen Polymeren zu unkontrollierbaren und unerwünschten Nebenreaktionen und somit zur Herabsetzung der mechanischen Eigenschaften der Fertigteile. Ferner erfordern sie einen hohen apparativen Aufwand.

Der Erfindung lag nun die Aufgabe zugrunde, Faserverbundwerkstoffe mit hoher Zähigkeit, guter Wärmeformbeständigkeit und Lösungsmittel- und Spannungsrißbeständigkeit herzustellen. Diese Aufgabe wird erfindungsgemäß dadurch gelöst, daß man einen vernetzbaren thermoplastischen aromatischen Polyether A mit einer Glastemperatur oberhalb von 80°C, der reaktive Gruppen enthält, von denen bei thermischer Anregung Vernetzungsreaktionen unter Bildung kovalenter Bindungen ausgehen können, gegebenenfalls zusammen mit einem keine reaktiven Gruppen enthaltenden thermoplastischen Polyethersufon, Polysulfon, Polyetherimid, Polycarbonat, aromatischen Polyether oder aromatischen Polyester mit einer Glastemperatur oberhalb von 80°C, auf Verstärkungsfassern in Form von Einzel-Rovings, parallelen bandförmigen Fasergelegen oder Gewebe aufbringt, das entstandene Halbzeug formt und in dem dabei erhaltenen Formteil die Kunststoffmatrix durch mindestens 5-minütiges Erhitzen auf Temperaturen oberhalb von 200°C, gegebenenfalls in Gegenwart von Vernetzungskatalysatoren, so vernetzt, daß sein Glastemperatur um mindestens 20°C ansteigt, und daß es in chlorierten Kohlenwasserstoffen mit einem Siedepunkt unterhalb von 80°C praktisch nicht mehr löslich ist.

Die ältere Patentanmeldung EP—A—161 453 betrifft temperaturbeständige aromatische Polyether, die funktionelle Gruppen tragen. Sie können, gegebenenfalls zusammen mit üblichen Zusatzstoffen, wie z.B. Verstärkungsfasern, zu Formteilen verarbeitet werden, in denen der Polyether durch Erhitzen vernetzt werden kann. Von orientierten Endlosfasern ist nicht die Rede, ebensowenig von einem verformbaren Halbzeug.

Polymere im Sinne der Erfindung sind solche mit einem Polymerisationsgrad von mindestens 5, vorzugsweise mindestens 10 und inbesondere mindestens 20.

Bevorzugte vernetzbare Polymere A sind aromatische Polyether, die Nitrilgruppen und/oder Schwefelbrücken und/oder Arylthio-, bzw. Alkylthio-Gruppen tragen. Unter Arylthio ist die Gruppierung —S—R zu verstehen, wobei R ein gegebenenfalls substituierter Arylrest ist, beispielsweise ein Phenyl-, Naphthyl- oder Pyridyl-Rest, der z.B. Halogen-, Aryl- oder Alkyl-Substituenten tragen kann, unter Alkylthio die Gruppe —S—R', wobei R' ein Alkylrest mit 1 bis 6 Kohlenstoffatomen ist.

Die genannten Gruppierungen können einerseits die Löslichkeit der Polyether A in organischen Lösungsmitteln verbessern, andererseits kann hiervon die Vernetzungsreaktions ausgehen. Bei der Vernetzungsreaktion werden kovalente Bindungen geknüpft.

Weiterhin kann die Löslichkeit von Polyether A durch die Anwesenheit von heterocylischen Gruppierungen im Polymermolekül, z.B. der Gruppierung —N=, verbessert werden oder durch eine meta-Verknüpfung der Einzelglieder innerhalb der Polymerkette.

Als reaktive Gruppen, von denen eine Vernetzungsreaktion ausgehen kann, können auch folgende Gruppen fungieren:

$$-NC \quad -NCO \quad -NCS \quad -SCN \quad -OCN \quad -C\equiv CR, \quad -CR=CR_2$$

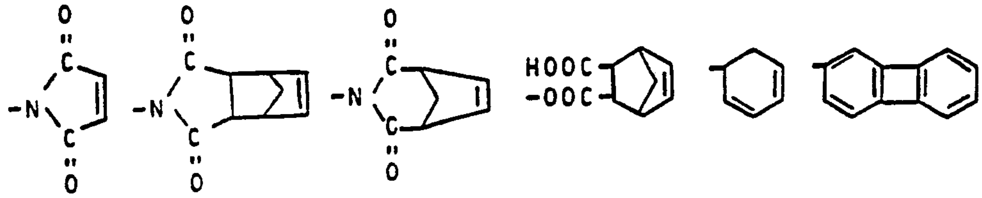

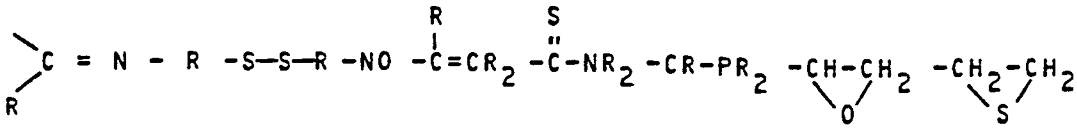

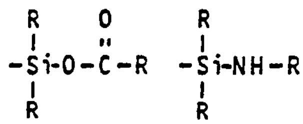

Ferner folgende Gruppierungen in der Polymerkette:

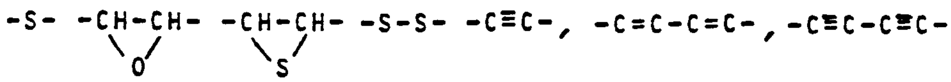

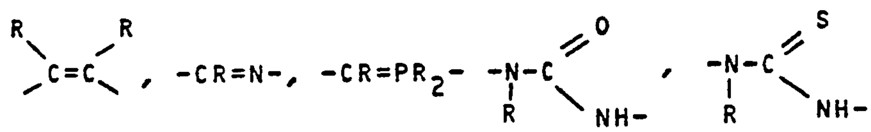

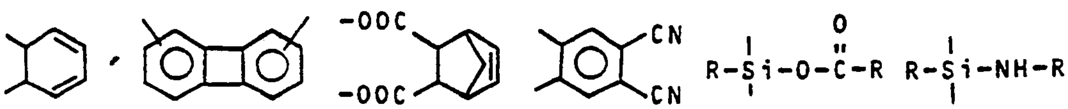

In allen diesen Formeln bedeutet dabei R Wasserstoff oder Alkyl.

Unter Umständen können auch Alkylreste und Halogensubstituenten als reaktive Gruppen fungieren.

Wegen der Anwesenheit der reaktiven Gruppen im Polymeren A ist ein Zusatz von chemischen Vernetzungsmitteln bei dem erfindungsgemäßen Verfahren nicht erforderlich.

Geeignete aromatische Polyether A sind z.B. solche, die als einzige reaktive Gruppen schwefelbrücken enthalten, beispielsweise Polykondensationsprodukte aus 4,4'-Thiodiphenol und aktivierten Dihalogenaromaten, wie z.B. Dichlordiphenylsulfon oder Dichlordiphenylketon, sowie entsprechende Copolyether, bei denen das Thiodiphenol teilweise durch andere Bisphenole ersetzt ist.

Besonders bevorzugt sind aromatische Polyether A der allgemeinen Formel —X—O—Y—O—, worin X und Y folgende Bedeutung haben: X ist ein Arylrest, der mindestens eine Nitril- und/oder eine Arylthio-Gruppe trägt; Y ist ein Diphenolrest, vorzugsweise der Bisphenol-S-Rest

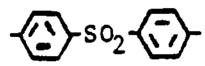,

der Bisphenol-T-Rest

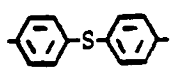

oder der Bisphenol-A-Rest

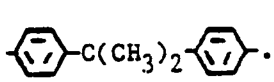.

Daneben sind noch die Reste folgender Diphenole geeignet:

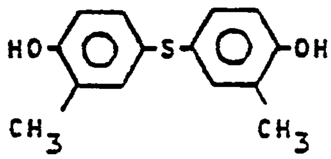
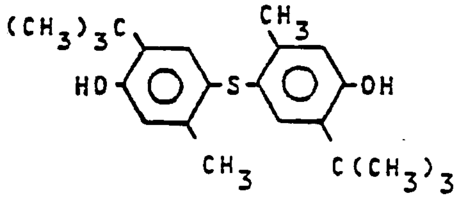
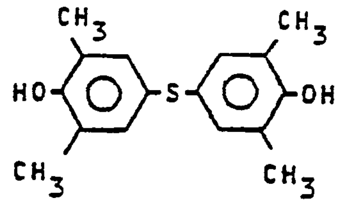

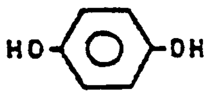 , 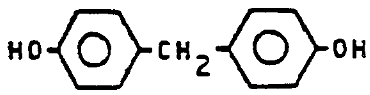 , 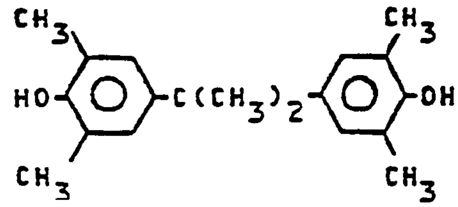 ,

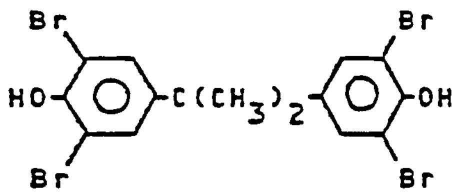 , 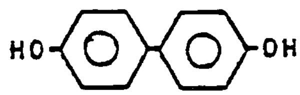 , 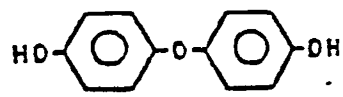 ,

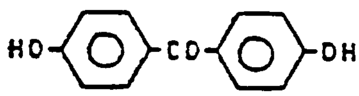 , 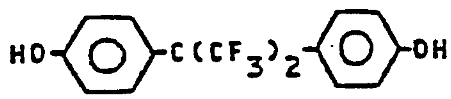 ,

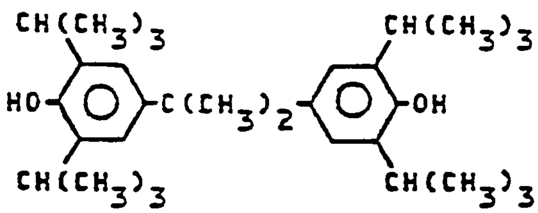 , 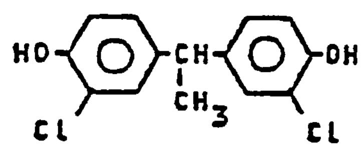 ,

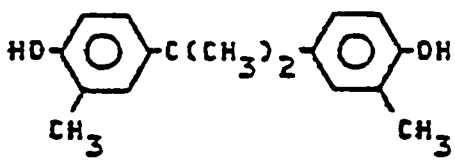
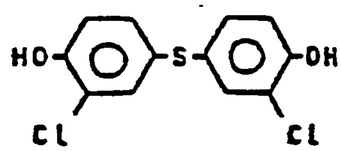 , 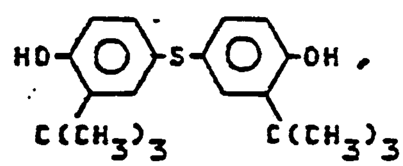 ,

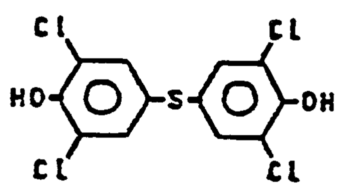
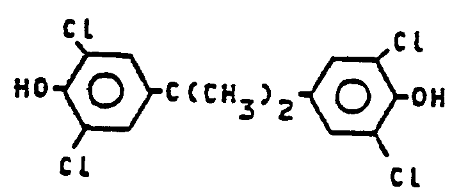

Geeignete Arylrest X sind z.B.:

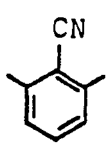 , 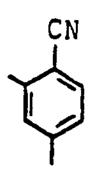 , 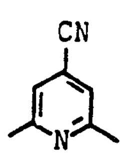 , 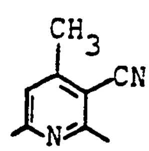 , 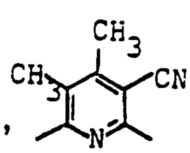

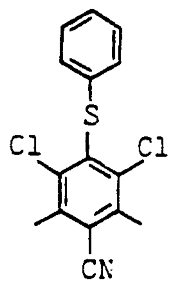 , 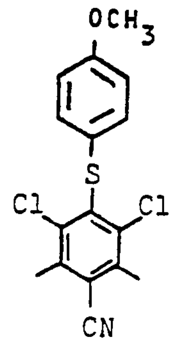 , 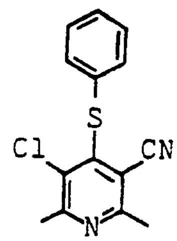 ,

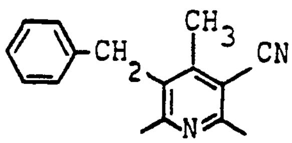 , 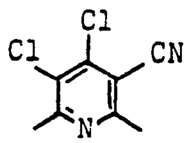 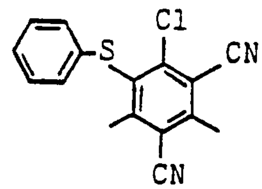 ,

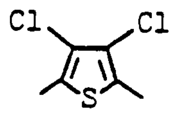 , 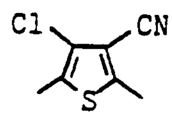 , 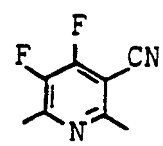 , 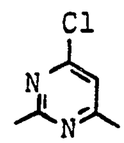 ,

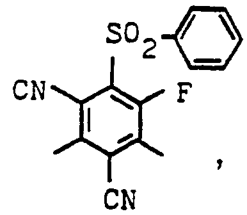 , 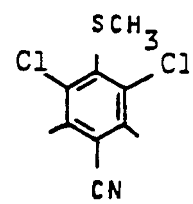

Es können auch Mischungen von zwei oder mehreren verschiedenartigen Polymeren A eingesetzt werden, sowie Copolymere, die verschiedenartige Monomerbausteine X bzw. Y enthalten.

Das Polymere A ist ein temperaturbeständiger Kunststoff, d.h., sein Glastemperatur liegt oberhalb von 80°C, vorzugsweise oberhalb von 100°C und insbesondere oberhalb von 130°C.

Bei den erfindungsgemäßen Verfahren kann man entweder nur den Polyether A allein auf die Verstärkungsfasern aufbringen oder eine Mischung des Polymeren A mit einem keine reaktiven Gruppen enthaltenden temperaturbeständigen thermoplastischen Polymeren B, welches ebenfalls eine Glastemperatur oberhalb von 80°C, vorzugsweise oberhalb von 100°C und insbesondere oberhalb von 130°C aufweist. Die Polymeren B sind vorzugsweise amorph und in organischen Lösungsmitteln löslich. In Frage kommen

Polyethersulfone 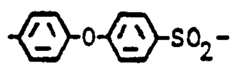 und

Polysulfone 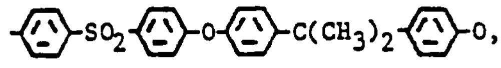

daneben auch Polyetherimide, wie z.B.

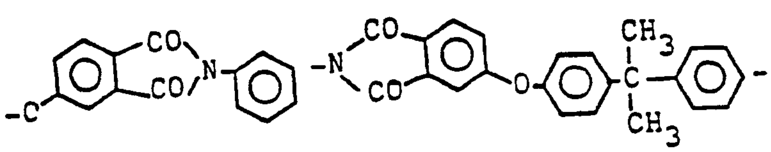 ,

Polycarbonate, aromatische Polyether und aromatische Polyester.

Die Polymeren A und B werden dabei im Gewichtsverhältnis 100:0 bis 1:99 eingesetzt. Die Polymeren

B enthalten zwar selbst keine reaktiven Gruppen, bei der Vernetzungsreaktion werden sie jedoch in die vernetzte Struktur miteingebaut, so daß sie praktisch nicht mehr löslich sind und ihre Spannungsrißanfälligkeit verlieren. Dies ist insbesondere der Fall bei Gemischen aus

A. 2 bis 50 Gewichtsteilen des aromatischen Polyethers der Formel

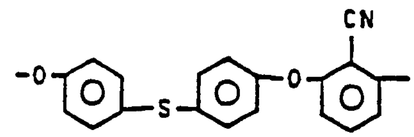

und

B. 98 bis 50 Gewichtsteilen Polyethersulfon oder Polysulfon,

Als Verstärkungsfasern kommen übliche Endlosfaserstränge (Rovings), z.B. aus Glas, Kohlenstoff oder aromatischen Polyamiden ((R)Aramid-Fasern) in Frage. Sie können als Einzel-Roving, als paralleles Fasergelege oder als Gewebe eingesetzt werden. Das Volumenverhältnis Kunststoff zu Verstärkungsfasern liegt bevorzugt zwischen 70:30 und 15:85, insbesondere zwischen 55:45 und 35:65.

Bei einem bevorzugten Herstellverfahren werden die Verstärkungsfasern mit einer Lösung der thermoplastischen Polymeren getränkt. Als Lösungsmittel kommen dabei vorzugsweise niedrigsiedende organische Flüssigkeiten in Frage, insbesonder chlorierte Kohlenwasserstoffe mit einem Siedepunkt unterhalb von 80°C.

Besonders geeignet ist Dichlormethan, sowie eine Mischung aus Dichlormethan und Chloroform im Volumenverhältnis von etwa 1:1. Daneben sind auch Trichlorethan, Chloroform, Hexafluorbenzol, fluorierte aliphatische Kohlenwasserstoffe und höher chlorierte Kohlenwasserstoffe geeignet. Grundsätzlich können auch höhersiedende Lösungsmittel verwendet werden, wie z.B. Dimethylformamid oder N-Methylpyrrolidon. Diese Lösungsmittel sind aber schwierig aus dem Halbzeug zu entfernen. Vorzugsweise tränkt man mit 5 bis 40, insbesondere mit 10 bis 30 gew.%igen Lösungen. Die Lösungen sollten dabei eine Viskosität unterhalb von 10.000 mPas, vorzugsweise unterhalb von 5000 mPas und insbesondere zwischen 50 und 1000 mPas haben. Beim Tränken werden die Rovings einzeln oder in Bandform nebeneinanderliegend durch das Lösungsmittelbad gezogen. Die Rovings sollten dabei möglichst gut gespreizt, d.h. flächig auseinandergezogen sein, was durch bekannte Vorrichtungen bewerkstelligt werden kann.

Der Fasergehelt des getränkten Rovings kann durch die Konzentration der Tränklösung, die Verweilzeit im Bad, sowie durch ein nach dem Tränkbad angeordnetes Quetschwalzenpaar beeinflußt werden. Anschließend an das Tränkbad durchlaufen die getränkten Rovings eine Trockenstrecke, wo die Lösungsmittel, vorzugsweise bei Temperaturen oberhalb von 60°C, insbesondere zwischen 80 und 150°C verdampft werden.

Die imprägnierten, kunstharzgebundenen Prepreg-Rovings können — in Form von Einzelfäden oder von 0,5 bis 2 cm breiten Bändern — klebfrei auf Spulen gewickelt werden. Sie stellen ein lagerstabiles Halbzeug dar, das thermoplastisch weiterverarbeitbar ist. Mann kann siw z.B. — gegebenenfalls auch direkt nach dem Imprägnieren und Trocknen — nach dem Durchlaufen einer Vorheizstrecke auf Kerne aufwickeln, dort durch Erhitzen auf Temperaturen zwischen 160 und 300°C verbinden und auf diese Weise rotationssymmetrische Formteile, z.B. Rohre, herstellen.

Ferner kann man den imprägnierten Roving direkt auf einem Wickelkern positionieren und erst dann das Lösungsmittel entfernen.

Flächige Prepregs können hergestellt werden, indem man eine Vielzahl von Rovings parallel durch das Tränkbad führt und das entstehende, vorzugsweise 2 bis 150 cm breite imprägnierte, kunstharzgebundene Roving-Band nach dem Trocken in plattenförmige Stücke schniedet oder endlos auf Spulen wickelt.

Diese vorzugsweise 0,1 bis 0,5 mm dicken, unidirektional faserverstärkten Prepregs können schichtweise übereinandergestapelt werden, wobei die einzelnen Prepregs in beliebige Winkel zueinander gelegt werden können. Die Stapel können dann durch Verpressen, vorzugsweise bei Temperaturen oberhalb des Erweichungsbereichs der Polymeren, zu Fertigteilen geformt werden. Dabei heizt man den Stapel z.B. außerhalb der Presse auf und legt dann in die Presse ein, die auf einer Temperatur unterhalb des Glaspunktes des Polymeren gehalten wird.

Weiterhin können Gewebe mit Lösungen der Polymeren getränkt werden. Durch Abdampfen des Lösungsmittels erhält man flächige Halbzeuge, die wie oben weiterverarbeitet werden können.

In den erhaltenen Formteilen wird schließlich die Kunststoffmatrix so vernetzt, daß die Glastemperatur um mindestens 20°C, vorzugsweise um mindestens 50°C auf einen Wert oberhalb von 100°C, vorzugsweise oberhalb von 180°C ansteigt. In unvernetztem Zustand ist die Glastemperatur, die am Fasern enthaltenden Verbund gemessen wird, gleich der Glastemperatur der Kunststoffmatrix; im vernetzten Zustand ist die Glastemperatur nur noch am Verbund meßbar, wobei nicht auszuschließen ist, daß neben der vernetzten Kunststoffmatrix auch die Verstärkungsfasern einen Beitrag liefern.

Die Vernetzung bewirkt außerdem, daß der Faserverbundwerkstoff in niedrigsiedenden chlorierten Kohlenwasserstoffen praktisch nicht mehr löslich ist. Dabei soll nicht ausgeschlossen werden, daß — im

Falle eines großen Überschusses an Polymer B — nicht alles Polymer B vollständig mitvernetzt. Dabei muß jedoch der lösliche Kunststoffanteil (gemessen durch einstündige Extraktion in Dichlormethan bei 35°C) geringer als 5%, vorzugsweise geringer als 1% sein.

Das Vernetzen der Kunststoffmatrix wird durch Erhitzen der Formteile, gegebenenfalls in Gegenwart von Vernetzungskatalysatoren, vorgenommen. Als Vernetzungskatalysatoren kommen insbesondere Lewis-Säuren, wie z.B. Zinkchlorid oder Aluminiumchlorid in Frage, die den Polymeren in Mengen von vorzugsweise 0,5 bis 5 Gew.% zugemischt worden waren, ferner Metalloxide, wie z.B. Aluminiumoxid und Eisen(II)-oxid, sowie Diphenyldisulfid oder Thiophosphorsäureester. Bevorzugt werden die Formteile mindestens 5 Min. lang, insbesondere 1 bis 10 Stunden lang auf Temperaturen oberhalb von 200°C, insbesondere zwischen 250° und 450°C erhitzt.

Dabei werden unschmelzbare, lösungsmittelbeständige Formkörper erhalten, die auch bei hohen Temperaturen, z.B. von 300°C noch gute mechanische Eigenschaften aufweisen. Die Fertigteile sind nach dem Vernetzen gegen die vorher benutzten Lösungsmittel — z.B. Chlorkohlenwasserstoffe — stabil.

Bei einem anderen bevorzugten Verfahren werden die Verstärkungsfasern mit einer Schmelze der thermoplastischen Polymeren getränkt. Diese Schmelze sollte möglichst niedrigviskos sein, d.h., sie sollte eine Viskosität unterhalb von 100.000 mPas aufweisen. Vorzugsweise sollte die Viksosität unterhalb von 20.000 mPas und insbesondere zwischen 1.000 und 10.000 mPas liegen.

Nach diesem Verfahren werden vorzugswiese Nitril- und/oder Arylthio- bzw. Alkylthio-Gruppen tragende, vernetzbare thermoplastische Polyether A mit einer Glastemperatur oberhalb von 80°C verarbeitet. Sie können mit keine reaktiven Seitengruppen tragenden thermoplastischen Polymeren B vermischt sein, wobei hier außer den amorphen Polysulfonen und Polyethersulfonen auch teilkristalline und somit unlösliche temperaturbeständige Polymere, wie Polyetherketone, Polyphenylensulfid, Polysulfidketone oder Polyamide in Frage kommen. Die Verfahrensschritte des Tränkens, Verformens und Vernetzens entsprechen den oben beschriebenen.

Bei einem anderen Verfahren wird Kunststoffpulver, bestehende aus Polyether A sowie gegebenenfalls Polymeren B auf Verstärkungsfasern aufgetragen. Das Pulver hat vorzugsweise eine mittlere Teilchengröße von 5 bis 15 µm. Dabei werden die durch Anblasen mit Luft oder durch andere bekannte Vorrichtungen möglichst gut aufgespreizte Rovings vorgeheizt und durch ein Wirbelbett mit dem Kunststoff-Pulver gezogen. Dabei hat das Kunststoffpulver eine Temperatur knapp unterhalb des Glaspunktes bzw. Schmelzpunktes. Anschließend wird das an den Verstärkungsfasern anhaftende Kunststoffpulver aufgeschmolzen, wobei die Fasern getränkt werden. Daran schließen sich dann die oben beschriebenen weiteren Verfahrensschritte an.

In einem weiteren Verfahren geht man aus von Kunststoff-Fasern, die aus Polyether A und gegebenenfalls Polymeren B bestehen und stellt Gewebe aus diesen Fasern und Verstärkungsfasern her, wobei z.B. die eine Faserart Kettfäden und die andere Faserart Schußfäden sind. Die Kunststoff-Fasern werden beim Formgebungsprozeß aufgeschmolzen und die entstehenden Halbzeuge wie oben beschrieben weiterverarbeitet.

Schließlich kann man auch von einer Kunststoff-Folie aus Polyether A und gegebenenfalls Polymeren B ausgehen und solche Folien in einer oder mehreren Lagen mit Flächengebilden aus Verstärkungsfasern übereinanderdrapieren. Die Lagen werden dann bei Temperaturen oberhalb des Schmelzbereichs der Kunststoffe verpreßt, das entstehend Halbzeug wird auf die beschriebene Weise weiterverarbeitet.

Ein weiterer Gegenstand der Erfindung ist ein Faserverbundwerkstoff, enthaltend einen reaktive Nitrilgruppen und/oder Schwefelbrücken und/oder Arylthio-Gruppen tragenden temperaturbeständigen thermoplastischen aromatischen Polyether A, gegebenenfalls zusammen mit einem keine reaktive Gruppen tragenden temperaturbeständigen thermoplastischen Polyethersulfon, Polysulfon, Polyetherimid, Polycarbonat, aromatischen Polyether oder aromatischen Polyester B, sowie 30 bis 80 Vol.-% orientierter Verstärkungsfasern in Form von Einzel-Rovings, parallelen, bandförmigen Fasergelegen oder Gewebe, wobei die Kunststoffmatrix über die reaktiven Gruppen so vernetzt ist, daß der Faserverbundwerkstoff eine Glastemperatur von mehr als 100°C aufweist und in niedrigsiedenden chlorierten Kohlenwasserstoffen mit einem Siedepunkt unterhalb von 80°C praktisch unlöslich ist.

Derartige Faserverbundwerkstoffe, die sich hohe Zähigkeit, gute Wärmeformbeständigkeit und Lösungsmittel — und Spannungsrißbeständigkeit auszeichnen, finden Anwendung als Kraftfahrzeugteile, sowie in der Luft- und Raumfahrtindustrie.

Die in den Beispielen genannten Teile und Prozente beziehen sich auf das Gewicht.

## Beispiele

a) Herstellung des Polyethers A1

54,57 g (0,25 Mol) 4,4'-Thiodiphenol und 43,0 g (0,25 Mol) 2,6-Dichlorbenzonitril werden in 420 ml N-Methylpyrrolidon und 190 ml Toluol gelöst und mit 35,88 g (0,26 Mol) wasserfreiem Kaliumcarbonat versetzt. Das Reaktionsgemisch wird unter ständigem Abdestillieren eines azeotropen Gemisches aus Wasser und Toluol innerhalb von 2 Stunden auf 150°C erhitzt. Nach vollständigem Entfernen des Toluols wird die Temperatur auf 180°C gesteigert und das Reaktionsgemisch 5 Stunden bei dieser Temperatur belassen. Durch 30-minütiges Einleiten eines Methylchlorid-Stromes wird die Polykondensation abgebrochen.

Die anorganischen Bestandteile werden nach Zugabe von 300 ml Chlorbenzol abfiltriert und das

Polymere in einem Gemisch aus gleichen Teilen 1%iger Essigsäure und Methanol gefällt. Nach sorgfältigem Waschen mit Wasser und Methanol wird 12 Stunden bei 100°C im Vakuum getrocknet.

Das Polymere besitzt ein Grenzviskosität $[\eta]_{NMP}^{25°C}$ = 0,59 dl.g$^{-1}$, eine Glastemperatur Tg = 153°C, und den K-Wert 52.

b) Herstellung des Polyethers A2

0,25 Mol 4,4'-Thiodiphenol und 0,25 Mol 2,6-Dichlor-3-cyan-4-methylpyridin werden wie unter a) beschrieben, polykondensiert, wobei jedoch die Reaktionstemperatur 150°C beträgt.

Das erhaltene Polymere A2

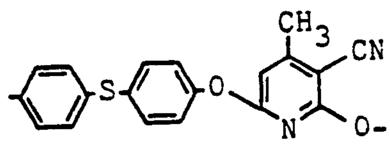

hat eine Glastemperatur von 154°C, ein reduzierte Viskosität $[\eta]_{NMP}^{25°C}$ von 0,21 dl.g$^{-1}$ und einen K-Wert von 29.

c) Herstellung des Copolyethers A3

Es wird wie unter b) beschrieben gearbeitet, wobei jedoch 0,125 Mol 2,6-Dichlorbenzonitril und 0,125 Mol 2,5-Dichlor-3-cyan-4-methylpyridin eingesetzt wurden. Das erhaltene Copolymere A3 besitzt eine Glastemperatur Tg von 148°C, einen K-Wert von 26.

d) Herstellung des Polyether A4

0,25 Mol 4,4'-Thiodiphenol und 0,25 Mol Dichlordiphenylsulfon werden in 420 ml N-Methylpyrrolidon und 190 ml Toluol gelöst und mit 0,26 Mol wasserfreiem Kaliumcarbonat versetzt. Das Reaktionsgemisch wird unter ständigem Abdestillieren eines azeotropen Gemisches aus Wasser und Toluol innerhalb von 2½ Stunden auf 150°C erhitzt. Nach vollständigem Entfernen des Toluols wird die Temperatur auf 180°C gesteigert und das Reaktionsgemisch 12 Stunden bei dieser Temperatur belassen. Durch 30-minütiges Einleiten eines Methylchlorid-Stromes wird die Polykondensation abgebrochen.

Die anorganischen Bestandteile werden nach Zugabe von 300 ml Chlorbenzol abfiltriert und das Polymere in einem Gesmich aus gleichen Teilen 1%iger Essigsäure und Methanol gefällt. Nach sorgfältigem Waschem mit Wasser und Methanol wird 12 Stunden bei 100°C in Vakuum getrocket. Die Glastemperatur des erhaltenen Polyetherthioethersulfons beträgt 165°C, die Lösungsviskosität $[\eta]_{NMP}^{25°C}$ 1,05 dl.g$^{-1}$.

e) Herstellung des Copolyethers A5

ein Gemisch aus 0,125 Mol Bisphenol A, 0,125 Mol 4,4'-Thiodiphenol und 0,25 Mol 4,4'-Dichlordiphenylsulfon wird unter Inertgas in 600 ml N-Methylpyrrolidon und 250 ml Toluol gelöst und mit 0,26 Mol Kaliumcarbonat versetzt. Es wird wie in d) beschrieben weitergearbeitet. Das erhaltene Copolymere hat eine Glastemperatur von 175°C.

Beispiel 1

Eine 20%ige Lösung des Polyethers A1 in $CH_2Cl_2$ mit einer Viskosität von 800 mPas bei Raumtemperatur wird zum Tränken von Glasfasern (1200 tex-Roving der Fa. Gevetex; benutzt.

Mehrere Fasern werden dabei parallel durch ein Bad mit der Polymerlösung gezogen, anschließend wird das Lösungsmittel bei 80 bis 130°C abgezogen und man erhält flächige, noch thermoplastische, unidirektional verstärkte Prepregs. Jeweils vier davon werden so übereinander drapiert, daß alle Fasern parallel liegen. Das Gelege wird in einer Presse bei 300°C und leichtem Druck etwa 1 Stunde lang aufgeheizt. Danach wird die Temperatur gesteigert bis auf 400°C. Der gesamte Aushärtungsvorgang dauert etwa 7 Stunden. Die anvernetzte Platte kann jedoch auch schon nach 1—2 Stunden unter der Presse für 8—15 Stunden in einem Ofen bei 350—400°C überführt werden, um die Vernetzung zu beenden.

Die fertige Platte ist metallisch schwarz, während das Prepreg-Gelege nahezu farblos war. Die vernetzte Platte ist genenüber $CH_2Cl_2$ beständig. Die Glastemperatur Tg ist auf 300°C angestiegen.

Der Schubmodul beträgt bei 20°C 5000 N/mm$^2$ und sinkt bei 200°C auf 4000, bei 300°C nur auf 3000 N/mm$^2$ ab. Der Faseranteil beträgt 75 Vol.-%.

Beispiel 2

Es wird wie in Beispiel 1 gearbeitet, wobei jedoch nur eine Glasfaser roving getränkt wird.

Nach Durchlaufen der Trockenstrecke wird der getränkte "Prepreg-Roving" auf eine Spule gewickelt. Er hat einen Glasfaseranteil von 70 Vol.-% und stellt ein lagerfähiges Halbzeug dar.

Der Prepreg-Roving wird auf einer herkömmlichen Wickelmaschine auf einem zylindrischen Dorn, der auf ca. 200°C getempert ist, abgelegt. Der Lagenaufbau ist 90°/90°/+45°/−45°/−45°/+45°/90°/90°, der

Dorndurchmesser beträgt 70 mm, das Rohr ist 100 mm lang. Nach dem völligen Bewickeln wird das Rohr 20 Stunden lang in einem Ofen bei 350—400°C zum Fertigteil vernetzt.

Beispiel 3

Es wird eine 20%ige Lösung hergestellt, die gleiche Teile des Polyethers A1 und Polyethersulfon mit einer Glastemperatur von 220°C in $CH_2Cl_2$ enthält. Die Viskosität der Lösung beträgt 800 mPas bei Raumtemperatur. Mit dieser Lösung werden Glasfasern (1200 tex. Roving der Fa. Gevetex) getränkt. Dabei werden mehrere Fasern parallel durch ein Bad mit der Polymerlösung gezogen, anschließend wird das Lösungsmittel bei 80 bis 130°C abgezogen und man erhält flächige, unidirektional verstärkte Prepregs.

Jeweils 4 davon werden so übereinander drapiert, daß alle Fasern parallel liegen. Das Gelege wird in einem Umluftofen 2 Stunden bei 350°C erhitzt, danach wird die Platte in einer Presse 2 Stunden lang auf 350°C erhitzt. Die anvernetzte Platte wird danach in einem Umluftofen 12 Stunden lang bei 350°C nachvernetzt.

Die fertige Platte ist metallisch schwarz, während das Prepreg-Gelege nahezu farblos war. Die Glastemperatur Tg beträgt 280°C. Der Schubmodul beträgt bei 20°C 4500 N . $mm^{-2}$ und sinkt bei 200°C auf 3900, bei 300°C nur auf 3000 N . $mm^{-2}$ ab. Der Fasergehalt liegt bei 65 Vol.%.

Bei einem Extraktionsversuch mit $CH_2Cl_2$ ergibt sich, daß die Kunststoffmatrix praktisch unlöslich geworden ist, d.h., daß auch das Polyethersulfon mitvernetzt wurde.

Beispiel 4

Ein 100 cm breites Glasgewebe mit einem Flächengewicht von 280 g . $m^{-2}$ wird mit einer 20%igen Lösung des Polyethers A2 in $CH_2Cl_2$ getränkt, indem man es kontinuierlich durch ein Tränkbad führt. Es durchläuft anschließend einen vertikalen Trockenturm, wobei das Lösungsmittel bei 130—150°C abgedampft wird. Das erhaltene Gewebeprepreg wird in Längen von 1 m geschnitten und als Halbzeug gelagert.

16. Gewebeprepregs werden in einer Presse übereinandergelegt und bei 340°C und 10 bar 4 Stunden lang verpreßt. Das fertige Formteil wird in einem Umluftofen 10 Stunden bei 340°C nachvernetzt.

Die entstandene Platte ist gegen $CH_2Cl_2$ lösungsmittelbeständig; die Glastemperatur Tg ist durch die Vernetzung von 150°C auf 300°C angestiegen.

Beispiel 5

Es wird eine 30%ige Lösung des Copolyethers A3 in $CH_2Cl_2$ hergestellt, die bei Raumtemperatur eine Viskosität von 60 mPas aufweist. Durch diese Lösung werden 100 Kohlenstoff-Fasern (T 300 der Fa. TORAY) mit einer Geschwindigkeit von 5 m . $min^{-1}$ parallel hindurchgezogen, anschließend wird das Lösungsmittel bei 130°C bis 180°C abgedampft und man erhält ein flächiges, thermoplastisches unidirektional verstärktes Prepreg von 300 mm Breite, von dem Stücke einer Länge von 100 cm abgeschnitten werden. 8 dieser Stücke werden so übereinandergestapelt, daß alle Fasern parallel ausgerichtet sind. Das Gelege wird in einer Presse bei 320°C und 10 bar 10 Stunden lang zu einer Probeplatte mit einem Fasergehalt von 60 Vol.% ausgehärtet. Anschließend wird 12 Stunden bei 320°C nachgetempert. Die Platte ist lösungsmittelbeständig. Die Glastemperatur ist von 148 auf 260°C gestiegen.

Beispiel 6

20 Rovings auf Kohlenstoff-Fasern (T 300 der Fa. TORAY) werden gut gespreizt und mit einer Geschwindigkeit von 0,5 m . $s^{-1}$ durch ein Schmelzebad mit dem Polyethers A1 gezogen. Die Badtemperatur betrug 280°C. Nach dem Abkühlen wird das 6 cm breite Prepreg-Band auf eine Spule aufgewickelt. Es stellt ein lagerfähiges thermoplastisches Halbzeug dar, das bei Bedarf zu Fertigteilen verformt und bei erhöhten Temperaturen vernetzt werden kann. Dabei wird die Kunststoffmatrix in $CH_2Cl_2$ unlöslich und die Glastemperatur Tg steigt je nach Vernetzungsbedingungen von 153° auf 250 bis 350°C an.

Beispiel 7

Eine 30 %ige Lösung des Copolyethers A4 in Methylenchlorid mit einer Viskosität von 400 mPas (bei Raumtemperatur) wird zum Tränken eines Glasfasergewebes (92 115 der Fa. Interglas) verwendet. Das Gewebe wird durch ein Tauchtränkbad gezogen und das Lösungsmittel wird abgedampft. Man erhält ein flächiges Halbzeug. Mehrere Lagen dieses Halbzeugs werden übereinanderdrapiert und in ein Plattenpreßwerkzeug eingelegt. Das Gelege wird bei 320°C 6 Stunden lang getempert. Die erhaltene, dunkel verfärbte Platte ist gegen Methylenchlorid beständig. Die Glastemperatur ist auf einem Wert oberhalb von 240°C angestiegen. Der Faseranteil des Laminats beträgt 60 Vol.-%, die Festigkeit in Faserrichtung mindestens 300 $N.mm^{-2}$, der Elastizitätsmodul 28 000 $N.mm^{-2}$.

Beispiel 8

In ähnlicher Weise wie in Beispiel 7 beschrieben, wird ein glasgewebeverstärktes Fertigteil aus dem Copolyether A5 hergestellt. Die Glastemperatur steigt hier durch die Vernetzung auf 220°C an.

## Patentansprüche

1. Verfahren zur Herstellung von Formteilen aus temperaturbeständigen, mit orientierten Fasern verstärkten Kunststoffen durch Aufbringen von

A. einem vernetzbaren thermoplastischen aromatischen Polyether mit einer Glastemperatur oberhalb von 80°C, der reaktive Gruppen enthält, von denen bei thermischer Anregung Vernetzungsreaktionen unter Bildung kovalenter Bindungen ausgehen können, und gegebenenfalls

B. einem keine reaktive Gruppen enthaltenden, thermoplastischen Polyethersulfon, Polysulfon, Polyetherimid, Polycarbonat, aromatischen Polyether oder aromatischen Polyester mit einer Glastemperatur oberhalb von 80°C, auf Verstärkungsfasern in Form von Einzel-Rovings, parallelen bandförmigen Fasergelegen oder Gewebe, und Formen des entstandenen Halbzeugs, dadurch gekennzeichnet, daß in dem dabei erhaltenen Formteil die Kunststoffmatrix durch mindestens 5-minütiges Erhitzen auf Temperaturen oberhalb von 200°C, gegebenenfalls in Gegenwart von Vernetzungskatalysatoren, so vernetzt wird, daß seine Glastemperatur um mindestens 20°C ansteigt, und daß es in chlorierten Kohlenwasserstoffen mit einem Siedepunkt unterhalb von 80°C praktisch nicht mehr löslich ist.

2. Verfahren zur Herstellung von Formteilen nach Anspruch 1, dadurch gekennzeichnet, daß man die Verstärkungsfasern mit einer Kunststofflösung einer Viskosität unterhalb von 10.000 mPa.s tränkt.

3. Verfahren nach Anspruch 2, dadurch gekennzeichnet, daß eine 5 bis 40 Gew.-%ige Lösung in einem organischen Lösungsmittel eingesetzt wird.

4. Verfahren nach Anspruch 3, dadurch gekennzeichnet, daß das organische Lösungsmittel ein chlorierter Kohlenwasserstoff mit einem Siedepunkt unterhalb von 80°C ist.

5. Verfahren zur Herstellung von Formteilen nach Anspruch 1, dadurch gekennzeichnet, daß man die Verstärkungsfasern mit einer Kunststoffschmelze einer Viskosität unterhalb von 100.000 mPa.s imprägniert.

6. Verfahren zur Herstellung von Formteilen nach Anspruch 1, dadurch gekennzeichnet, daß man ein Kunststoffpulver auf die Verstärkungsfasern aufträgt und das Kunststoffpulver aufschmilzt.

7. Verfahren zur Herstellung von Formteilen nach Anspruch 1, dadurch gekennzeichnet, daß man ein Gewebe auf Basis von Verstärkungsfasern und Kunststoff-Fasern erzeugt, und die Kunststoff-Fasern aufschmilzt.

8. Verfahren zur Herstellung von Formteilen nach Anspruch 1, dadurch gekennzeichnet, daß man jeweils eine oder mehrere Lagen eines Flächengebildes aus Verstärkungsfasern und einer Kunststoff-Folie übereinander drapiert, die Lagen verpreßt und die Kunststoff-Folie aufschmilzt.

9. Verfahren nach den Ansprüche 1 bis 8, dadurch gekennzeichnet, daß die aromatischen Polyether mindestens eine Nitrilgruppe und/oder eine Schwefelbrücke und/oder eine Arylthio-Gruppe tragen.

10. Verfahren nach den Ansprüchen 1 bis 8, dadurch gekennzeichnet, daß die Polymeren A und B im Gewichtsverhältnis 100:0 bis 1:99 eingesetzt werden.

11. Verfahren nach den Ansprüche 1 bis 8, dadurch gekennzeichnet, daß das Volumenverhältnis Kunststoff zu Verstärkungsfasern zwischen 70:30 und 15:85 liegt.

12. Verfahren nach Anspruch 1, dadurch gekennzeichnet, daß das Formteil 1 bis 10 Stunden lang auf Temperaturen zwischen 250 und 450°C erhitzt wird.

13. Faserverbundwerkstoff, enthaltend einen reaktive Nitrilgruppen und/oder Schwefelbrücken und/oder Arylthio-Gruppen tragenden temperaturbeständigen thermoplastischen aromatischen Polyether A, gegebenenfalls zusammen mit einem keine reaktive Gruppen tragenden temperaturbeständigen thermoplastischen Polyethersulfon, Polysulfon, Polyetherimid, Polycarbonat, aromatischen Polyether oder aromatischen Polyester B, sowie 30 bis 80 Vol.-% orientierter Verstärkungsfasern in Form von Einzel-Rovings, parallelen, bandförmigen Fasergelegen oder Gewebe, dadurch gekennzeichnet, daß die Kunststoffmatrix über die reaktiven Gruppen so vernetzt ist, daß der Faserverbundwerkstoff eine Glastemperatur von mehr als 100°C aufweist und in niedrigsiedenden chlorierten Kohlenwasserstoffen mit einem Siedepunkt unterhalb von 80°C praktisch unlöslich ist.

## Revendications

1. Procédé d'obtention de pièces moulées au départ de matières plastiques résistant aux températures élevées et renforcées de fibres orientées, par application de

A. un polyéther aromatique thermoplastique réticulable dont la température de transition vitreuse est supérieure à 80°C, contenant des groupements réactifs, qui suite à une activation thermique peuvent donner lieu à des réactions de réticulation conduisant à la formation de liaisons covalentes, et éventuellement de

B. un polyéthersulfone, polysulfone, polyétherimide, polycarbonate, polyéther aromatique ou polyester aromatique, thermoplastique, ne renfermant pas de groupement réactif, dont la température de transition vitreuse est supérieure à 80°C, sur des fibres de renforcement se présentant sous la forme de rovings individuels, de fibres tissées en forme de bande, parallèles, et formage du produit demi-fini réalisé, caractérisé en ce que l'on réticule la matrice de matière plastique dans la pièce moulée obtenue par un chauffage d'au moins 5 minutes à des températures supérieures à 200°C, le cas échéant en présence de catalyseurs de réticulation, en manière telle que sa température de transition vitreuse s'élève d'au moins

20°C et qu'elle ne soit pratiquement plus soluble dans des hydrocarbures chlorés de point d'ébullition inférieur à 80°C.

2. Procédé d'obtention de pièces moulées selon la revendication 1, caractérisé en ce que l'on imprègne les fibres de renforcement d'une solution de matière plastique de viscosité inférieure à 10000 mPa.s.

3. Procédé selon la revendication 2, caractérisé en ce que l'on utilise une solution de 5 à 40% en poids dans un solvant organique.

4. Procédé selon la revendication 3, caractérisé en ce que le solvant organique est un hydrocarbure chloré dont le point d'ébullition est inférieur à 80°C.

5. Procédé d'obtention de pièces moulées selon la revendication 1, caractérisé en ce que l'on imprègne les fibres de renforcement d'une masse fondue de matière plastique de viscosité inférieure à 100000 mPa.s.

6. Procédé d'obtention de pièces moulées selon la revendication 1, caractérisé en ce que l'on dépose une matière plastique en poudre sur les fibres de renforcement et que l'on fait fondre la poudre de matière plastique.

7. Procédé d'obtention de pièces moulées selon la revendication 1, caractérisé en ce que l'on produit un tissu au départ de fibres de renforcement et de fibres synthétiques et que l'on fait fondre les fibres synthétiques.

8. Procédé d'obtention de pièces moulées selon la revendication 1, caractérisé en ce que l'on pose l'une sur l'autre une ou plusieurs couches d'un produit plat constitué de fibres de renforcement et d'une feuille de matière plastique, l'on comprime les couches et l'on fait fondre la feuille de matière plastique.

9. Procédé selon les revendications 1 à 8, caractérisé en ce que les polyéthers aromatiques portent au moins un groupement nitrile et/ou un pont soufre et/ou un groupement thioaryle.

10. Procédé selon les revendications 1 à 8, caractérisé en ce que l'on met les polymères A et B en oeuvre en un rapport pondéral de 100:0 à 1:99.

11. Procédé selon les revendications 1 à 8, caractérisé en ce que le rapport volumétrique de la matière plastique aux fibres de renforcement fluctue entre 70:30 et 15:85.

12. Procédé selon la revendications 1, caractérisé en ce que l'on chauffe la pièce moulée pendant 1 à 10 heures à des températures comprises entre 250 et 450°C.

13. Matière composite de fibres, comportant un polyéther aromatique A, thermoplastique, résistant aux températures élevées, portant des groupements thioaryle, des ponts soufre et/ou des groupements nitrile réactifs éventuellement conjointement à un polyéthersulfone, polysulfone, polyétherimide, polycarbonate, polyéther aromatique ou polyester aromatique B, thermoplastique, résistant aux températures élevées, ne portant pas de groupement réactif, ainsi que de 30 à 80% en volume de fibres de renforcement orientées, sous forme de rovings individuels, de fibres déposées ou tissées en forme de bande parallèles, caractérisé en ce que la matrice de matière plastique est réticulée par les groupements réactifs en manière telle, que la matière composite de fibres présente une température de transition vitreuse de plus de 100°C et soit pratiquement insoluble dans des hydrocarbures chlorés à bas point d'abullition, de point d'ébullition inférieur à 80°C.

## Claims

1. A process for the production of moldings from a heat-stable plastic reinforced with oriented fibers, by applying

A. A crosslinkable thermoplastic aromatic polyether having a glass transition temperature above 80°C and containing reactive groups from which, on thermal excitation, crosslinking reactions can emanate with the formation of covalent bonds, and, if required,

B. a thermoplastic polyether sulfone, polysulfone, polyetherimide, polycarbonate, aromatic polyether or aromatic polyester which does not contain any reactive groups and has a glass transition temperature above 80°C onto reinforcing fibers in the form of individual rovings, parallel-laid ribbons of fiber or woven fabrics, and molding the resulting semi-finished product, wherein, in the molding obtained, the plastic matrix is cross-linked by heating for not less than 5 minutes at above 200°C, in the presence or absence of crosslinking catalysts, so that its glass transition temperature increases by not less than 20°C and it becomes virtually insoluble in chlorinated hydrocarbons having a boiling point below 80°C.

2. A process for the production of moldings as claimed in claim 1, wherein the reinforcing fibers are impregnated with a plastic solution having a viscosity of less than 10,000 mPa.s.

3. A process as claimed in claim 2, wherein a 5—40% strength by weight solution in an organic solvent is used.

4. A process as claimed in claim 3, wherein the organic solvent is a chlorinated hydrocarbon having a boiling point below 80°C.

5. A process for the production of moldings as claimed in claim 1, wherein the reinforcing fibers are impregnated with a plastic melt having a viscosity of less than 100,000 mPa.s.

6. A process for the production of moldings as claimed in claim 1, wherein a plastic powder is applied onto the reinforcing fibers and is fused.

7. A process for the production of moldings as claimed in claim 1, wherein a woven fabric based on reinforcing fibers and plastic fibers is produced, and the plastic fibers are fused.

8. A process for the production of moldings as claimed in claim 1, wherein one or more layers of a

sheet-like structure of reinforcing fibers and one or more layers of plastic sheets are draped one on top of the other, the layers are pressed and the plastic sheets are fused.

9. A process as claimed in any of claims 1 to 8, wherein the aromatic polyether carries one or more nitrile groups or sulfur bridges or arylthio groups.

10. A process as claimed in any of claims 1 to 8, wherein the polymers A and B are used in a weight ratio of from 100:0 to 1:99.

11. A process as claimed in any of claims 1 to 8, wherein the volume ratio of plastic reinforcing fibers is from 70:30 to 15:85.

12. A process as claimed in claim 1, wherein the molding is heated at from 250 to 450°C for from 1 to 10 hours.

13. A fiber reinforced material containing a heat-stable thermoplastic aromatic polyether A which carries reactive nitrile groups or sulfur bridges or arylthio groups, if necessary together with a heat-stable thermoplastic polyether sulfone, polysulfone, polyetherimide, polycarbonate, aromatic polyether or aromatic polyester B which does not carry any reactive groups, and from 30 to 80% by volume of oriented reinforcing fibers in the form of individual rovings, parallel-laid ribbons of fiber or woven fabrics, wherein the plastic matrix is cross-linked via the reactive groups in such a way that the fiber-reinforced material has a glass transition temperature of greater than 100°C and is virtually insoluble in low-boiling chlorinated hydrocarbons having a boiling point below 80°C.